# EUROPÄISCHE PATENTSCHRIFT

(11) **EP 3 083 303 B1**
(45) Veröffentlichungstag und Bekanntmachung des Hinweises auf die Patenterteilung: **15.05.2019**
(21) Anmeldenummer: 14786687.5
(22) Anmeldetag: 22.10.2014
(51) Int. Cl.: B60K 1/04, B62D 21/15, F16F 15/31

(54) **VERFAHREN UND VORRICHTUNG ZUR MASSEENTKOPPLUNG FÜR EIN KRAFTFAHRZEUG**
METHOD AND DEVICE FOR RELEASING A MASS IN A VEHICLE
MÉTHODE ET MOYENS POUR LIBÉRER UNE MASSE DANS UN VÉHICLE

(30) Priorität: 19.12.2013 DE 102013226771
(43) Veröffentlichungstag der Anmeldung: 26.10.2016
(73) Patentinhaber: Robert Bosch GmbH, 70442 Stuttgart (DE)
(72) Erfinder: PAWELETZ, Anton, 70736 Fellbach (DE)
(86) Internationale Anmeldenummer: PCT/EP2014/072611
(87) Internationale Veröffentlichungsnummer: WO 2015/090683

(56) Entgegenhaltungen:
- WO-A1-2013/143747
- DE-A1- 3 141 164
- DE-A1-102011 105 490
- JP-A- H0 648 185
- JP-A- H0 692 273
- JP-A- 2007 118 796

## Beschreibung

Die Erfindung betrifft ein Verfahren und eine Vorrichtung zur Masseentkopplung für ein Kraftfahrzeug.

### Stand der Technik

Einer der deutlichsten Trends ist die Elektrifizierung des Transports, insbesondere von Straßenfahrzeugen. Fahrzeuge werden zunehmend mittels eines Elektromotors oder mittels einer Kombination von Elektromotor und Verbrennungsmotor angetrieben. Die dazu notwendige elektrische Energie wird in einem elektrischen Energiespeicher gespeichert der und an Bord des Fahrzeugs installiert ist. Deshalb ist zunehmend auch die Bedeutung von elektrischer Batterietechnik eine wichtige Voraussetzung für diese Entwicklung. Steigende Anforderungen bezüglich der Sicherheitstechnik ziehen die Entwicklung zunehmend komplexerer Crash-Konstruktionen und Systeme nach sich. Bei elektrischen und sogenannten Hybridfahrzeugen ergibt sich zusätzlich das Problem des Beitrags der Fahrzeugbatterie zu einer Crash-Bilanz sowie die Absicherung der Batterie als eine relativ teure Komponente.

Die größte Bedeutung haben dabei elektrisch angetriebene Fahrzeuge. Zur Erzielung einer großen Reichweite werden sie mit Batterien ausgestattet, die eine Masse von mehreren hundert Kilogramm aufweisen. Der Anteil der Batteriemasse an der Gesamtmasse bei bekannten Elektrofahrzeugen beträgt typischerweise 30 % und weist somit einen überproportional hohen Anteil auf. Angesichts der Tatsache, dass die Energiedichte von Batterien in absehbarer Zeit die Energiedichte konventioneller Kraftstoffe nicht erreichen wird, ist ihre relativ hohe Masse ein Sicherheitsfaktor. Es entsteht somit ein zunehmender Bedarf für Schutzeinrichtungen und Maßnahmen, mit denen die Fahrzeuginsassen, die Batterie und auch das Fahrzeug entsprechend geschützt werden können. Die Art der Befestigung der Batterie an der Karosserie des Kraftfahrzeugs spielt daher eine wichtige Rolle. Bekannte Konzepte für elektrisch angetriebene Fahrzeuge sehen die Batterie als einheitlichen steifen Block mit möglichst tief gesetztem Massemittelpunkt im Bereich des Unterbodens des Fahrzeugs zwischen Vorder- und Hinterachse vor. Die Batterie mit ihrer Tragstruktur beeinflusst auch die Steifigkeit der Fahrgastzelle.

Während einer Kollision des Fahrzeugs werden die Massenmodule, d.h. Insassen, Gepäck und Batterie, einer impulsartigen Beschleunigung ausgesetzt. Entscheidend für den jeweiligen Beschleunigungs-Zeit-Verlauf eines Moduls sind die jeweilig zu einem bestimmten Zeitpunkt aktiven Massenanteile, ihre relative Kinematik und ihr energetischer Anteil an der Gesamtbilanz der kinetischen Energie.

Die DE 10 2012 204 856 A1 offenbart eine Massekopplungsanordnung für ein Fahrzeug. Durch ein elastisches und steuerbares Verbindungssystem zwischen Masseanteilen des Fahrzeugs ist es möglich, während einer Fahrzeugkollision in einem bestimmten Zeitraum die Beschleunigungen von Masseeinheiten aktiv zu beeinflussen. Dadurch werden die wirkenden Belastungen an Insassen und an die Batterie angepasst, d.h. nicht die gesamte Fahrzeugmasse, sondern nur in dem definierten Zeitabschnitt ein bestimmter Masse-Anteil. Beispielsweise ist es möglich, die Batterie inklusive ihrer Trägerkonstruktion zeitweise vom Fahrzeug mechanisch abzukoppeln. Durch diese Einflussnahme wird erreicht, dass die Batteriemasse während einer Kollision ihre eigene Bewegungstrajektorie durchfährt und letztendlich eine günstigere zeitliche Gestaltung der Teil-Crash-Pulse der anteiligen Massen und auf sie wirkenden Belastungen erreicht wird.

JP 2007 118796 A offenbart ein Batteriepack, welches auf der Oberfläche einer Bodenplatte installiert ist, und welches sich in Fahrzeugrichtung vorwärts bewegt, wenn eine Stoßbelastung auf das Fahrzeug angewendet wird. Zu diesem Zeitpunkt wird eine Batterie Fixierung an der Bodenplatte gelöst, und eine Drehführung stößt an eine auf der Bodenplatte Seite installierte Drehwelle, was in einer Drehung um die Drehwelle resultiert, so dass der hintere Teil den Aufprall zu absorbiert.

### Offenbarung der Erfindung

Die vorliegende Erfindung schafft eine Masseentkopplungsvorrichtung für ein Kraftfahrzeug mit den Merkmalen des Patentanspruchs 1.

Die vorliegende Erfindung schafft des Weiteren ein Verfahren zur Masseentkopplung für ein Kraftfahrzeug mit den Merkmalen des Patentanspruchs 10.

Durch die Entkopplung des Masseaufnahmeelements und des darin aufgenommenen Masseobjekts bzw. der Fahrzeugbatterie kann eine Anpassung des Zeit-/Positionsverlaufes der Fahrzeugelemente und ihrer resultierenden Beschleunigungen im Crash-Fall und die anteilige Umwandlung der kinetischen Energie des
Masseobjekts entlang der Fahrzeuglängsachse in eine kinetische Energie der Rotation des Masseobjekts vorgesehen werden.

Eine Reduzierung der Crash-Energie wird dadurch erreicht, dass die kinetische Energie der Bewegung des Masseobjekts entlang der Längsachse des Fahrzeugs in die kinetische Energie der Rotation des Masseobjekts umgewandelt und damit nicht direkt am Crash beteiligt wird. Die somit gespeicherte kinetische Energie der Batterierotation kann sich nach dem Crash entladen, ohne dass das Masseobjekt gegen die Karosserie des Kraftfahrzeugs schlägt. Die Masseentkopplungsvorrichtung ist zudem an jeweils unterschiedliche Fahrzeuge anpassbar. Beispielsweise kann das vorgegebene Zeitintervall, in welchem die kinetische Energie der Bewegung des Masseaufnahmeelements und des darin aufgenommenen Masseobjekts entlang der Fahrzeuglängsachse von der ersten Position in die zweite Position auf die Karosserie des Kraftfahrzeugs durch die ersten Energieaufnahmemittel übertragen wird, variiert werden. Darüber hinaus stabilisiert eine Coriolis-Kraft der Rotation des Masseobjekts eine Fahrzeug-Trajektorie im Crash-Fall und trägt somit zur Fahrzeugsicherheit bei.

Vorteilhafte Ausführungsformen und Weiterbildungen ergeben sich aus den Unteransprüchen sowie aus der Beschreibung unter Bezugnahme auf die Figuren.

Vorzugsweise ist vorgesehen, dass die ersten Energieaufnahmemittel zumindest eine Dämpfungsanordnung aufweisen, welche dazu ausgebildet ist, die Bewegung des Masseaufnahmeelements entlang der Fahrzeuglängsachse zu dämpfen, wobei die zumindest eine Dämpfungsanordnung einen ersten Wirbelstromaktor aufweist. Durch Entkopplung des Masseaufnahmeelements und des darin angeordneten Masseobjekts von der Karosserie des Kraftfahrzeugs können diese zeitweilig von der Karosserie des Kraftfahrzeugs abgekoppelt werden, was ein verbessertes Crash-Verhalten des Kraftfahrzeugs durch einen zeitlich versetzten Energieabbau der Crash-Energie des Kraftfahrzeugs und der Crash-Energie des Masseaufnahmeelements und des darin aufgenommenen Masseobjekts bewirkt. Das Vorsehen der Dämpfungsanordnung ermöglicht ein Wiederankoppeln des Masseaufnahmeelements und des darin aufgenommenen Masseobjekts in einem vorgegebenen Zeitintervall. Der Energieabbau der Crash-Energie des Masseaufnahmeelements und des darin aufgenommenen Masseobjekts kann somit durch Einstellen des Dämpfungsgrades der Dämpfungsanordnung variiert werden.

Vorzugsweise ist ferner vorgesehen, dass das Masseobjekt in einem Umfangsbereich einen Mitnehmer aufweist, welcher derart ausgebildet ist, dass der Mitnehmer bei einer Bewegung des Masseaufnahmeelements und des darin aufgenommenen Masseobjekts entlang der Fahrzeuglängsachse mit den zweiten Energieaufnahmemitteln derart zusammenwirkt, dass das Masseobjekt durch die zweiten Energieaufnahmemittel in Rotation versetzbar ist. Dadurch kann in vorteilhafter Weise die Längsbewegung des Masseaufnahmeelements und des darin aufgenommenen Masseobjekts durch die zweiten Energieaufnahmemittel in die kinetische Energie der Rotation des Masseobjekts versetzt werden, wobei die Rotation des Masseobjekts nach dem Fahrzeug-Crash über längere Zeit entladen werden kann.

Gemäß einer weiteren bevorzugten Ausgestaltung ist vorgesehen, dass die zweiten Energieaufnahmemittel einen mit einer Stoßstange gelenkig verbundenen Stößer aufweisen, welcher mit dem auf dem Masseaufnahmeelement ausgebildeten Mitnehmer derart zusammenwirkt, dass das Masseaufnahmeelement bei einer Bewegung des Masseaufnahmeelements und des darin aufgenommenen Masseobjekts entlang der Fahrzeuglängsachse durch den Stößer in Rotation versetzbar ist, wobei die zweiten Energieaufnahmemittel eine Rückholfeder aufweisen, welche ein distales Ende des Stößers mit der Stoßstange verbindet, wobei der Mitnehmer in der ersten Position des Masseaufnahmeelements mit dem Stößer im Eingriff ist, und wobei die zweiten Energieaufnahmemittel dazu ausgebildet sind, den Stößer nach in Rotation Versetzen des Masseaufnahmeelements in einen in der Stoßstange ausgebildeten Hohlraum rückzuholen.

Der Stößer ist somit dazu ausgebildet, bei Bewegung des Masseaufnahmeelements und des darin aufgenommenen Masseobjekts entlang der Fahrzeuglängsachse diese durch Anstoßen des Mitnehmers in Rotation zu versetzen. Nach Inrotationversetzen des Masseaufnahmeelements und des darin aufgenommenen Masseobjekts wird der Stößer durch die Rückholfeder in den in der Stoßstange ausgebildeten Hohlraum rückgeholt, sodass bei der Drehung des Masseaufnahmeelements und des darin aufgenommenen Masseobjekts der Mitnehmer nicht mit dem Stößer in Kontakt kommt.

Vorzugsweise ist ferner vorgesehen, dass die Entkopplungsmittel zumindest eine Klemmeinrichtung zum Koppeln und/oder Entkoppeln des Masseaufnahmeelements von der Karosserie des Kraftfahrzeugs und zumindest einen zweiten Wirbelstromaktor aufweisen, wobei der zumindest eine zweite Wirbelstromaktor dazu ausgebildet ist, die Klemmeinrichtung zum Koppeln und/oder Entkoppeln des Masseaufnahmeelements von der Karosserie des Kraftfahrzeugs zu betätigen. Die Klemmeinrichtung kann somit in vorteilhafter Weise durch den Wirbelstromaktor beispielsweise nach Detektion eines Fahrzeug-Crashes abgeschaltet werden, wodurch das Masseaufnahmeelement und das darin aufgenommene Masseobjekt von der Karosserie des Kraftfahrzeugs entkoppelt werden.

Gemäß einem weiteren bevorzugten Ausführungsbeispiel ist vorgesehen, dass die Klemmeinrichtung zum Koppeln und/oder Entkoppeln des Masseaufnahmeelements von der Karosserie des Kraftfahrzeugs in einer Rotationsachse des Masseaufnahmeelements und des darin aufgenommenen Masseobjekts angeordnet ist. Durch den punktsymmetrischen Aufbau des Masseaufnahmeelements und des Masseobjekts sowie die Lagerung dieser gegenüber der Karosserie des Kraftfahrzeugs kann die Klemmeinrichtung zum Koppeln und/oder Entkoppeln des Masseaufnahmeelements von der Karosserie des Kraftfahrzeugs in vorteilhafter Weise ebenfalls in der Rotationsachse des Masseaufnahmeelements und des darin aufgenommenen Masseobjekts angeordnet werden und ermöglicht somit eine einfache und platzsparende Anordnung der Klemmeinrichtung.

Gemäß einer weiteren bevorzugten Ausgestaltung ist vorgesehen, dass eine Entladung einer kinetischen Rotationsenergie des in Rotation versetzten Masseaufnahmeelements und des darin aufgenommenen Masseobjekts durch eine Luftreibung und/oder eine Lagerreibung zumindest eines Lagers des Masseaufnahmeelements abbaubar ist. Die kinetische Rotationsenergie des in Rotation versetzten Masseaufnahmeelements und des darin aufgenommenen Masseobjekts kann somit über eine relativ zum Energieabbau durch die ersten Energieaufnahmemittel lange Zeitdauer unkontrolliert abgebaut werden. Dadurch ergibt sich ein gegenüber herkömmlichen Vorrichtungen vorteilhafter, verzögerter Energieabbau der Crash-Energie des Kraftfahrzeuges.

Gemäß einer weiteren bevorzugten Ausgestaltung ist vorgesehen, dass die Entladung einer kinetischen Rotationsenergie des in Rotation versetzten Masseaufnahmeelements und des darin aufgenommenen Masseobjekts durch eine Bremsanordnung zum Abbremsen des Masseaufnahmeelements und des darin aufgenommenen Masseobjekts abbaubar ist. Die kinetische Rotationsenergie des in Rotation versetzten Masseaufnahmeelements und des darin aufgenommenen Masseobjekts kann somit über eine relativ zum Energieabbau durch die ersten Energieaufnahmemittel lange Zeitdauer kontrolliert abgebaut werden. Dadurch ergibt sich ein gegenüber herkömmlichen Vorrichtungen vorteilhafter verzögerter Energieabbau der Crash-Energie des Kraftfahrzeuges.

Gemäß einem weiteren bevorzugten Ausführungsbeispiel ist vorgesehen, dass die Bremsanordnung zum Abbremsen des Masseaufnahmeelements und des darin aufgenommenen Masseobjekts ein pneumatisches Bremselement und eine Mehrzahl von mechanischen Bremselementen aufweist, wobei das pneumatische Bremselement dazu ausgebildet ist, durch Zuführung eines Luftstroms in einen zwischen einem äußeren Umfangsabschnitt des Masseobjekts und einem inneren Umfangsabschnitt eines Gehäuses der Bremsanordnung ausgebildeten Kanal mit der Mehrzahl von mechanischen Bremselementen derart zusammenzuwirken, dass die durch den Kanal strömende Luft einen bei Auftreffen auf die Mehrzahl von flächig ausgebildeten mechanischen Bremselementen einen Verzögerungsimpuls durch Abbremsen des Masseaufnahmeelements und des darin aufgenommenen Masseobjekts bewirkt, und wobei die Mehrzahl von mechanischen Bremselementen jeweils mit einer Federkraft eines Federelements beaufschlagt sind, welche bei Anliegen einer Federkraft, welche größer als eine durch die Rotation des Masseaufnahmeelements und des darin aufgenommenen Masseobjekts erzeugte Fliehkraft ist, ein mechanisches Abbremsen des Masseelements durch Reibungskontakt der Mehrzahl von mechanischen Bremselementen mit einer inneren Umfangsfläche des Gehäuses der Bremsanordnung bewirkt.

Somit kann eine kontrollierte, schnelle Entladung der kinetischen Energie des Masseaufnahmeelements und des darin aufgenommenen Masseobjekts durch kombiniertes pneumatisches und mechanisches Bremsen erreicht werden. Die Regelung erfolgt automatisch durch die Nutzung der Fliehkraft als Stellvariable.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung eines Masseaufnahmeelements und eines darin aufgenommenen Masseobjekts gemäß einer ersten Ausführungsform der Erfindung;
- Fig. 2: eine schematische Darstellung einer in einem Kraftfahrzeug verbauten Masseentkopplungsvorrichtung gemäß der ersten Ausführungsform der Erfindung;
- Fig. 3: eine Draufsicht der Masseentkopplungsvorrichtung für ein Kraftfahrzeug gemäß der ersten Ausführungsform der Erfindung;
- Fig. 4: eine Querschnittsansicht und eine vergrößerte Teilansicht der in Fig. 3 gezeigten Masseentkopplungsvorrichtung gemäß der ersten Ausführungsform der Erfindung;
- Fig. 5: eine Schnittansicht der Masseentkopplungsvorrichtung für ein Kraftfahrzeug gemäß der ersten Ausführungsform der Erfindung;
- Fig. 6: eine vergrößerte Teilansicht der in Fig. 5 gezeigten Schnittdarstellung der Masseentkopplungsvorrichtung im gekoppelten Zustand einer Klemmeinrichtung zum Koppeln und/oder Entkoppeln des Masseaufnahmeelements von einer Karosserie des Kraftfahrzeugs gemäß der ersten Ausführungsform der Erfindung;
- Fig. 7: eine vergrößerte Teilansicht der in Fig. 5 gezeigten Schnittdarstellung der Masseentkopplungsvorrichtung im entkoppelten Zustand einer Klemmeinrichtung zum Koppeln und/oder Entkoppeln des Masseaufnahmeelements von einer Karosserie des Kraftfahrzeugs gemäß der ersten Ausführungsform der Erfindung;
- Fig. 8: eine Draufsicht der Masseentkopplungsvorrichtung für ein Kraftfahrzeug gemäß einer zweiten Ausführungsform der Erfindung;
- Fig. 9: eine Schnittansicht der Masseentkopplungsvorrichtung für ein Kraftfahrzeug gemäß einer dritten Ausführungsform der Erfindung;
- Fig. 10: eine Längsschnittansicht der Masseentkopplungsvorrichtung für ein Kraftfahrzeug gemäß der dritten Ausführungsform der Erfindung;
- Fig. 11: eine schematische Darstellung einer Bremsanordnung zum Abbremsen des Masseaufnahmeelements und des darin aufgenommenen Masseobjekts gemäß der dritten Ausführungsform der Erfindung;
- Fig. 12: eine schematische Darstellung einer Bremsanordnung zum Abbremsen des Masseaufnahmeelements und des darin aufgenommenen Masseobjekts gemäß der dritten Ausführungsform der Erfindung;
- Fig. 13: ein zeitliches Ablaufdiagramm eines Abbaus einer kinetischen Energie einer Rotation des Masseaufnahmeelements und des darin aufgenommenen Masseobjekts gemäß der dritten Ausführungsform der Erfindung;
- Fig. 14: ein Ablaufdiagramm des Verfahrens zur Masseentkopplung für ein Kraftfahrzeug gemäß der ersten Ausführungsform der Erfindung;
- Fig. 15: ein zeitliches Ablaufdiagramm eines Geschwindigkeitsabbaus des Kraftfahrzeugs bei einem Fahrzeug-Crash mittels der Masseentkopplungsvorrichtung für ein Kraftfahrzeug gemäß der ersten bis dritten Ausführungsform der Erfindung; und
- Fig. 16: ein zeitliches Ablaufdiagramm eines Energie-Abbaus bei einem Fahrzeug-Crash mittels der Masseentkopplungsvorrichtung für ein Kraftfahrzeug gemäß der ersten bis dritten Ausführungsform der Erfindung.

In den Figuren der Zeichnung bezeichnen gleiche Bezugszeichen gleiche oder funktionsgleiche Elemente, Bauteile oder Komponenten, soweit nichts Gegenteiliges angegeben ist.

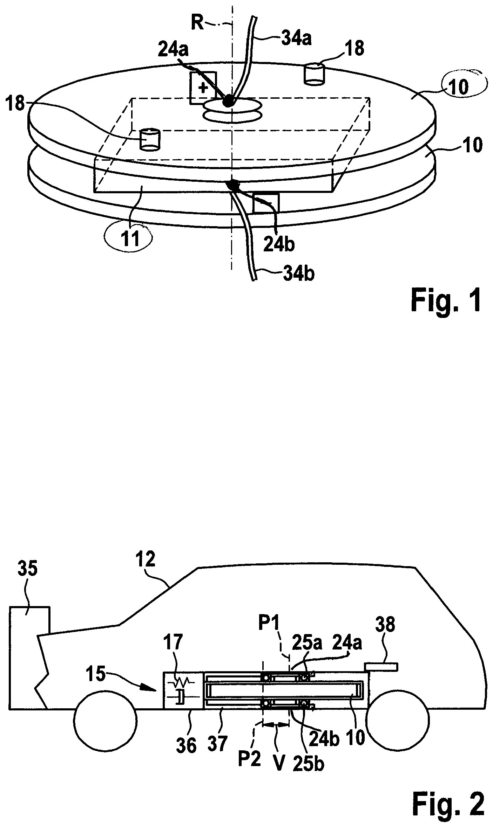

Fig. 1 zeigt eine schematische Darstellung eines Masseaufnahmeelements und eines darin aufgenommenen Masseobjekts gemäß einer ersten Ausführungsform der Erfindung.

Das Masseaufnahmeelement 10 ist plattenförmig mit einer oberen und unteren Platte ausgebildet, wobei die obere und untere Platte im vorliegenden Ausführungsbeispiel jeweils eine zylindrische Form aufweisen. Zwischen der oberen und unteren Platte des Masseaufnahmeelements 10 ist das Masseobjekt 11 angeordnet. Das Masseobjekt 11 ist im vorliegenden Ausführungsbeispiel würfelförmig ausgebildet. Das Masseaufnahmeelement 10 und das Masseobjekt 11 sind punktsymmetrisch aufgebaut und weisen eine gemeinsame Rotationsachse R auf. Das Masseaufnahmeelement 10 ist im vorliegenden Ausführungsbeispiel ein Batterieträger und das Masseobjekt 11 eine Fahrzeugbatterie zum Antrieb eines elektrisch bzw. zumindest teilweise elektrisch betriebenen Kraftfahrzeugs. An einem äußeren Umfangsbereich der oberen Platte des Masseaufnahmeelements 10 ist an gegenüberliegenden Positionen einer Oberseite der oberen Platte des Masseaufnahmeelements 10 jeweils ein Mitnehmer 18 angeordnet.

Das Masseobjekt 11 weist an einer Oberseite eine erste abschaltbare Klemme 24a und an einer Unterseite eine zweite abschaltbare Klemme 24b auf. An der Oberseite des Masseaufnahmeelements 10 ist eine erste flexible Zuleitung 34a angeordnet, welche das Masseobjekt 11 kontaktiert. Des Weiteren ist an der Unterseite des Masseaufnahmeelements 10 eine zweite flexible Zuleitung 34b angeordnet, welche das Masseobjekt 11 kontaktiert. Die erste flexible Zuleitung 34a kontaktiert einen Pluspol des Masseobjekts bzw. der Batterie 11 und die zweite flexible Zuleitung 34b kontaktiert einen Minuspol des Masseobjekts 11.

Die flexiblen Zuleitungen 34a, 34b dienen als elektrische Leitungen zur Versorgung eines elektrischen Antriebs des Kraftfahrzeugs mit Energie. Das Masseaufnahmeelement 10 und das Masseobjekt 11 sind ausgewuchtet und gegenüber einer (in Fig. 1 nicht gezeigten) Karosserie des Kraftfahrzeugs gelagert. Die Klemmen 24a, 24b befinden sich in der Rotationsachse R und sind durch jeweilige (in Fig. 1 nicht gezeigten) Aktoren abschaltbar.

Fig. 2 zeigt eine Draufsicht der Masseentkopplungsvorrichtung für ein Kraftfahrzeug gemäß der ersten Ausführungsform der Erfindung.

In Fig. 2 ist eine Kollision des Kraftfahrzeugs, insbesondere der Karosserie 12 des Kraftfahrzeugs, mit einem Hindernis 35 dargestellt. Das Masseaufnahmeelement 10 und das darin aufgenommene Masseobjekt 11 sind in einer Crash-Kammer 36 des Masseobjekts 11 angeordnet und mittels Lagern 25a, 25b gegenüber der Karosserie 12 des Kraftfahrzeugs gelagert. Das Lager 25a ist an der Oberseite des Masseaufnahmeelements 10 und das Lager 25b an der Unterseite des Masseaufnahmeelements 10 angeordnet.
In Fahrzeuglängsrichtung vor dem Masseaufnahmeelement 10 sind erste Energieaufnahmemittel 15 angeordnet. Die ersten Energieaufnahmemittel 15 weisen im vorliegenden Ausführungsbeispiel eine Dämpfungsanordnung 17 auf. Die Dämpfungsanordnung 17 ist dazu ausgebildet, eine Bewegung des Masseaufnahmeelements 10 und des darin aufgenommenen Masseobjekts 11 entlang der Fahrzeuglängsachse zu dämpfen. Bei einer Fahrzeugkollision ist das Masseaufnahmeelement 10 und das darin aufgenommene Masseobjekt 11 von der Karosserie 12 des Kraftfahrzeugs durch (in Fig. 2 nicht gezeigte Entkopplungsmittel) entkoppelbar. Das Masseaufnahmeelement 10 und das darin aufgenommene Masseobjekt 11 sind nach Entkopplung von der Karosserie 12 des Kraftfahrzeuges von einer ersten Position P1 in eine zweite Position P2 bewegbar. Die zweite Position P2 ist im vorliegenden Ausführungsbeispiel in Fahrzeuglängsrichtung in Richtung einer Fahrzeugfront des Kraftfahrzeugs vor der ersten Position P1 angeordnet. Im Falle der Entkopplung des Masseaufnahmeelements 10 und des darin aufgenommenen Masseobjekts 11 sind diese mittels eines beweglichen Lagerflansches 37, welcher zwischen den jeweiligen Lagern 25a, 25b des Masseaufnahmeelements 10 und der Crash-Kammer 36 angeordnet ist und eine lineare Lagerung aufweist, beweglich angeordnet.

Ein Abstand V zwischen der ersten Position P1 und der zweiten Position P2 des Masseaufnahmeelements 10 zeigt eine Verschiebung der Rotationsachse des Masseaufnahmeelements 10 nach dem Crash. Des Weiteren ist ein Steuergerät 38 zum Steuern der Entkopplungsmittel, der ersten Energieaufnahmemittel, sowie sonstiger Komponenten der Masseentkopplungsvorrichtung für das Kraftfahrzeug vorgesehen.

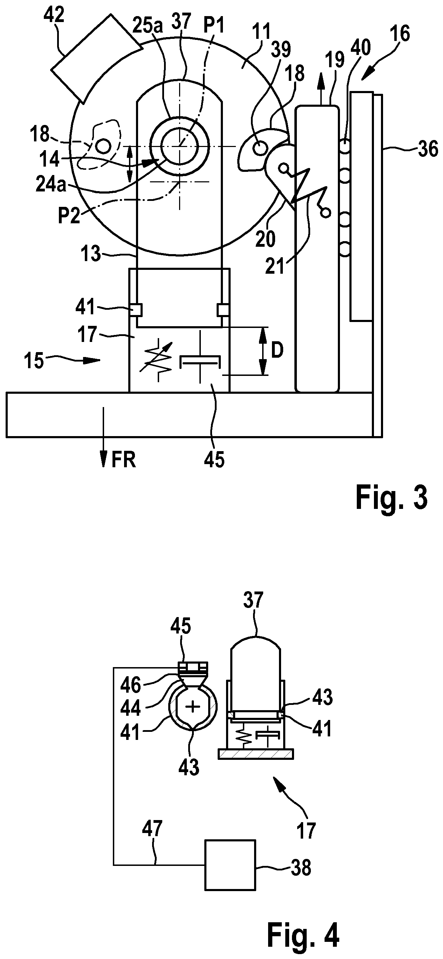

Fig. 3 zeigt eine Draufsicht der Masseentkopplungsvorrichtung für ein Kraftfahrzeug gemäß der ersten Ausführungsform der Erfindung.

Die Masseentkopplungsvorrichtung weist das Masseaufnahmeelement 10 und das darin aufgenommene Masseobjekt 11 auf, welche punktsymmetrisch aufgebaut und gegenüber der Karosserie 12 des Kraftfahrzeugs gelagert sind. Darüber hinaus weist die Masseentkopplungsvorrichtung ein Führungsmittel 13 auf, welches das Masseaufnahmeelement 10 und das darin aufgenommene Masseobjekt 11 entlang der Fahrzeuglängsachse beweglich lagert. Das Führungsmittel 13 ist durch den (in Fig. 2 gezeigten) beweglichen Lagerflansch 37 ausgebildet.

Überdies weist die Masseentkopplungsvorrichtung Entkopplungsmittel 14 auf, welche dazu ausgebildet sind, das Masseaufnahmeelement 10 und das darin aufgenommene Masseobjekt 11 von der Karosserie 12 des Kraftfahrzeugs zu entkoppeln. Die Entkopplungsmittel 14 weisen eine (in Fig. 3 nicht gezeigte) Klemmeinrichtung zum Koppeln und/oder Entkoppeln des Masseaufnahmeelements 10 von der Karosserie 12 des Kraftfahrzeugs auf. Des Weiteren weisen die Entkopplungsmittel 14 an jeweils der Oberseite und der Unterseite des Masseaufnahmeelements 10 angeordnete Wirbelstromaktoren auf, die dazu ausgebildet sind, die Klemmeinrichtung zum Koppeln und/oder Entkoppeln des Masseaufnahmeelements 10 von der Karosserie 12 des Kraftfahrzeugs zu betätigen.

Die Masseentkopplungsvorrichtung weist des Weiteren die ersten Energieaufnahmemittel 15 auf, welche dazu ausgebildet sind, eine kinetische Energie einer Bewegung des Masseaufnahmeelements 10 und des darin aufgenommenen Masseobjekts 11 entlang der Fahrzeuglängsachse von der ersten Position P1 in die zweite Position P2 in einem vorgegebenen Zeitintervall auf die Karosserie 12 des Kraftfahrzeugs zu übertragen.

Die Klemmeinrichtung 23 ist durch die beiden Wirbelstromaktoren abschaltbar. Dabei wird ein möglicher Lichtbogen durch eine spezielle (in Fig. 3 nicht gezeigte) Vorrichtung an den abschaltbaren Klemmen bzw. Polklemmen gelöscht. Die Dämpfungsanordnung 17 wird durch den Wirbelstromaktor 45 auf weich umgeschaltet durch eine schnelle Entfernung eines Sprengrings 41. Dadurch wird die Bewegung des Masseaufnahmeelements 10 und des darin aufgenommenen Masseobjekts 11 entlang der Fahrzeuglängsachse von der ersten Position P1 in die zweite Position P2 in dem vorgegebenen Zeitintervall ermöglicht, wodurch die kinetische Energie der Bewegung des Masseaufnahmeelements 10 auf die Karosserie 12 des Kraftfahrzeugs übertragbar ist.

Des Weiteren weist die Masseentkopplungsvorrichtung zweite Energieaufnahmemittel 16 auf, welche dazu ausgebildet sind, die kinetische Energie der Bewegung des Masseaufnahmeelements 10 und des darin aufgenommenen Masseobjekts 11 entlang der Fahrzeuglängsachse L zumindest teilweise in eine kinetische Energie einer Rotation des Masseobjekts 11 umzuwandeln. Die zweiten Energieaufnahmemittel 16 weisen einen mit einer Stoßstange 19 gelenkig verbundenen Stößer 20 auf, welcher mit dem auf dem Masseaufnahmeelement 10 ausgebildeten Mitnehmer 18 derart zusammenwirkt, dass das Masseaufnahmeelement 10 bei einer Bewegung des Masseaufnahmeelements 10 und des darin aufgenommenen Masseobjekts 11 entlang der Fahrzeuglängsachse durch den Stößer 20 in Rotation versetzbar ist. Die zweiten Energieaufnahmemittel 16 weisen des Weiteren eine Rückholfeder 21 auf, welche ein distales Ende des Stößers 20 mit der Stoßstange 19 verbindet, wobei der Mitnehmer 18 in der ersten Position P1 des Masseaufnahmeelements 10 mit dem Stößer 20 im Eingriff ist, und wobei die zweiten Energieaufnahmemittel 16 dazu ausgebildet sind, den Stößer 20 nach Inrotationversetzen des Masseaufnahmeelements 10 in einen in der Stoßstange 19 ausgebildeten Hohlraum 22 rückzuholen.

Bei der Bewegung des Masseaufnahmeelements 10 und des darin aufgenommenen Masseobjekts 11 entlang der Fahrzeuglängsachse L in Frontrichtung FR des Kraftfahrzeugs stößt der Stößer 20 den Mitnehmer 18 an, sodass das Masseaufnahmeelement 10 und das darin aufgenommene Masseobjekt 11 gemäß der vorliegenden Ausführungsform gegen den Uhrzeigersinn in Rotation versetzt werden. Eine Dämpfungsamplitude D im Bereich der Dämpfungsanordnung 17 des Masseaufnahmeelements 10 entspricht einer Distanz zwischen der ersten Position P1 und der zweiten Position P2 des Masseaufnahmeelements 10. Der Mitnehmer 18 ist derart angeordnet, dass dieser in der ersten Position P1 des Masseaufnahmeelements 10 in einer in der Draufsicht des Masseaufnahmeelements 10 horizontalen Rotationsachse des Masseaufnahmeelements 10 liegt, insbesondere dass ein Befestigungs- bzw. Anbindungspunkt des Mitnehmers 18 an das Masseaufnahmeelement 10 in der vorstehend genannten Rotationsachse des Masseaufnahmeelements 10 liegt.

Die zweiten Energieaufnahmemittel 16, insbesondere die Stoßstange 19, ist mittels eines Linearlager 40 an einer Seitenwand der Crash-Kammer der Masseentkopplungsvorrichtung angeordnet. In der vorliegenden Ausführungsform ist zudem eine Zusatzbremse 42 zum Abbremsen des in Rotation versetzten Masseaufnahmeelements 10 an einem äußeren Umfangsbereich des Masseaufnahmeelements 10 angeordnet.

Fig. 4 zeigt eine Querschnittsansicht und eine vergrößerte Teilansicht der in Fig. 3 gezeigten Masseentkopplungsvorrichtung gemäß der ersten Ausführungsform der Erfindung.

Bei der im linken Bereich von Fig. 4 gezeigten Ansicht handelt es sich um eine Querschnittsansicht der Klemmeinrichtung 23 zum Koppeln und/oder Entkoppeln des Masseaufnahmeelements 10 von der Karosserie 12 des Kraftfahrzeugs. Im linken Bereich von Fig. 4 ist der Wirbelstromaktor der Klemmeinrichtung zum Koppeln und/oder Entkoppeln des Masseaufnahmeelements 10 von der Karosserie 12 des Kraftfahrzeugs gezeigt. Der Wirbelstromaktor weist eine bewegliche Kupferscheibe 45 sowie eine in Vertikalrichtung darunter angeordnete Erreger-Spule auf.

Unterhalb der Erreger-Spule 46 ist ein Keil 44 angeordnet. Um das Masseaufnahmeelement 10 und das darin aufgenommene Masseobjekt 11 herum ist der Sprengring 41 angeordnet. Im unteren Bereich ist zudem eine Verjüngung 43 vorgesehen. Die bewegliche Kupferscheibe 45 des Wirbelstromaktors ist über eine Zuleitung 47 mit dem Steuergerät 38 zur Ansteuerung des Wirbelstromaktors verbunden.

Im rechten Bereich von Fig. 4 ist eine Längsschnittansicht der Masseentkopplungsvorrichtung im Bereich der Dämpfungsanordnung 17 gezeigt. Der bewegliche Lagerflansch 37 ist entlang der Fahrzeuglängsachse beweglich angeordnet.

Der Sprengring 41 ist in einer Aussparung in einem Gehäuse der Dämpfungsanordnung 17 angeordnet.

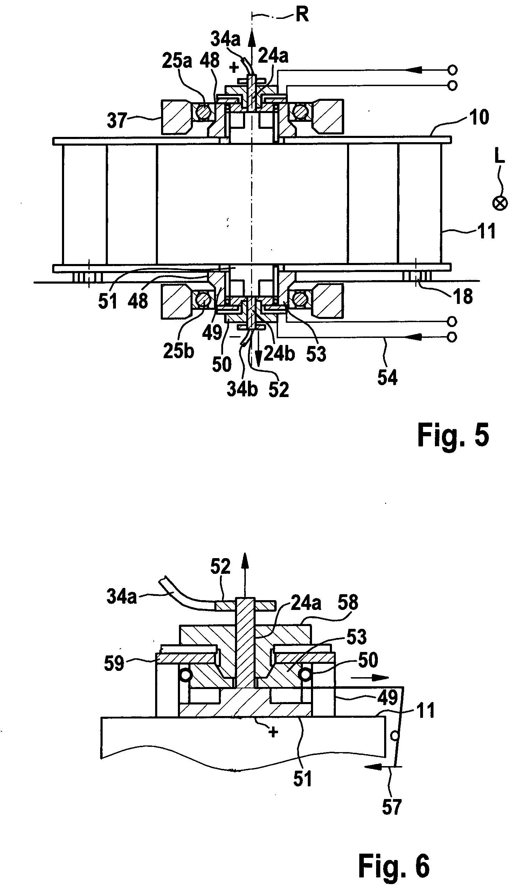

Fig. 5 zeigt eine Schnittansicht der Masseentkopplungsvorrichtung für ein Kraftfahrzeug gemäß der ersten Ausführungsform der Erfindung.

Die Masseentkopplungsvorrichtung weist das Masseaufnahmeelement 10 und das darin aufgenommene Masseobjekt 11 auf. An der Oberseite des Masseaufnahmeelements 10 ist das Lager 25a sowie der bewegliche Lagerflansch 37 angeordnet. Die Klemmeinrichtung weist ferner den abschaltbaren Teil 24a der Klemme sowie einen stationären Teil 51 auf. Ferner ist die flexible Zuleitung 34a zum Anschluss an den Pluspol des Masseobjekts 11 vorgesehen.

An der Unterseite des Masseaufnahmeelements 10 ist wie auch an der Oberseite des Masseaufnahmeelements 10 das Lager 25b, der bewegliche Lagerflansch 37, sowie die Klemmeinrichtung vorgesehen, welche einen abschaltbaren Teil 24b der Klemme sowie den stationären Teil 51 der Klemme aufweist. Ferner ist ein Schaft 48 des Masseobjekts 11 vorgesehen, welcher mit der Rotationsachse R des Masseaufnahmeelements 10 punktsymmetrisch ausgebildet ist und eine im Wesentlichen zylindrische Form aufweist.

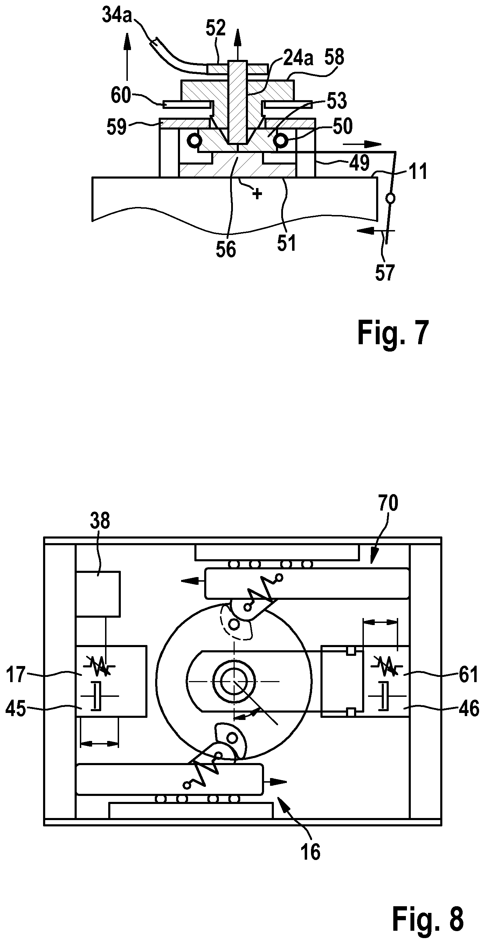

Der Schaft 48 ist ferner benachbart zu einem äußeren Umfangsabschnitt des stationären Teils 51 der Klemmeinrichtung angeordnet und umgibt diesen. Des Weiteren ist an einem mit Bezug auf das Masseaufnahmeelement 10 distalen Abschnitt des Schafts 48 des Masseobjekts 11 eine Isolationshülse 49 angeordnet. Überdies weist die Klemmeinrichtung eine Ringfeder 50, einen schnappbaren Klemmen-Trennungsring 53 mit Lichtbogen-Löschvorrichtung sowie eine Zuleitung 54 des Wirbelstromaktors 24b auf. Die vorstehend genannten Komponenten der Klemmeinrichtung sind mit Bezug auf Fig. 6 und Fig. 7 näher beschrieben.

Fig. 6 zeigt eine vergrößerte Teilansicht der in Fig. 5 gezeigten Schnittdarstellung der Masseentkopplungsvorrichtung im gekoppelten Zustand einer Klemmeinrichtung zum Koppeln und/oder Entkoppeln des Masseaufnahmeelements von einer Karosserie des Kraftfahrzeugs gemäß der ersten Ausführungsform der Erfindung.

In Fig. 6 ist die Klemmeinrichtung, insbesondere der Wirbelstromaktor der Klemmeinrichtung, eingeschaltet. Durch eine Bestromung der Spule 59 des Wirbelstromaktors wird das Masseobjekt durch die Klemmeinrichtung eingeklemmt. Der schnappbare Klemmen-Trennungsring 53 mit Lichtbogen-Löschvorrichtung ist ein mehrteiliger punktsymmetrischer Verschluss, welcher durch die Ringfeder 50 zusammengedrückt wird und im gekoppelten Zustand der Klemmeinrichtung durch den abschaltbaren Teil 24a der Klemme des Masseobjekts 11 voneinander getrennt bzw. abgeschoben wird.

Fig. 7 zeigt eine vergrößerte Teilansicht der in Fig. 5 gezeigten Schnittdarstellung der Masseentkopplungsvorrichtung im entkoppelten Zustand einer Klemmeinrichtung zum Koppeln und/oder Entkoppeln des Masseaufnahmeelements von einer Karosserie des Kraftfahrzeugs gemäß der ersten Ausführungsform der Erfindung.

In Fig. 7 wird die Spule 59 des Wirbelstromaktors nicht bestromt. Somit kommt es zur Entkopplung des Masseaufnahmeelements 10 und des darin aufgenommenen Masseobjekts 11 von der Karosserie 12 des Kraftfahrzeugs. Der Mitnehmer 58 wird freigegeben und der schnappbare Klemmen-Trennungsring 53 wird durch die Ringfeder 4 zusammengedrückt, sodass es zu einer Isolation 56 zwischen den jeweiligen Klemmenteilen kommt. Ferner ist ein Rückstellmechanismus 57 zum Rückstellen des schnappbaren Klemmen-Trennungsrings 53 vorgesehen.

Fig. 8 zeigt eine Draufsicht der Masseentkopplungsvorrichtung für ein Kraftfahrzeug gemäß einer zweiten Ausführungsform der Erfindung.

In Fig. 8 ist zusätzlich zu der in Fig. 3 gezeigten ersten Ausführungsform gemäß einer zweiten Ausführungsform eine zweite Dämpfungsanordnung 61 vorgesehen. Die zweite Dämpfungsanordnung 61 ist gegenüberliegend der Dämpfungsanordnung 17 an einer in Fahrzeuglängsrichtung heckseitigen Position der Crash-Kammer angeordnet. Darüber hinaus sind gegenüberliegend den zweiten Energieaufnahmemitteln 16 zusätzliche Energieaufnahmemittel 70 vorgesehen, welche die gleiche Funktion wie die Energieaufnahmemittel 16 aufweisen. Die Dämpfungsanordnung 61 und die Energieaufnahmemittel 70 ermöglichen eine Bewegung des Masseaufnahmeelements 10 und des darin aufgenommenen Masseobjekts 11 entlang der Fahrzeuglängsachse in Richtung eines Fahrzeughecks des Kraftfahrzeugs in der Crash-Kammer. Dies ist beispielsweise bei einer Heckkollision, in welcher Beschleunigungskräfte auf das Masseaufnahmeelement 10 in Richtung eines Fahrzeughecks wirken, wünschenswert.

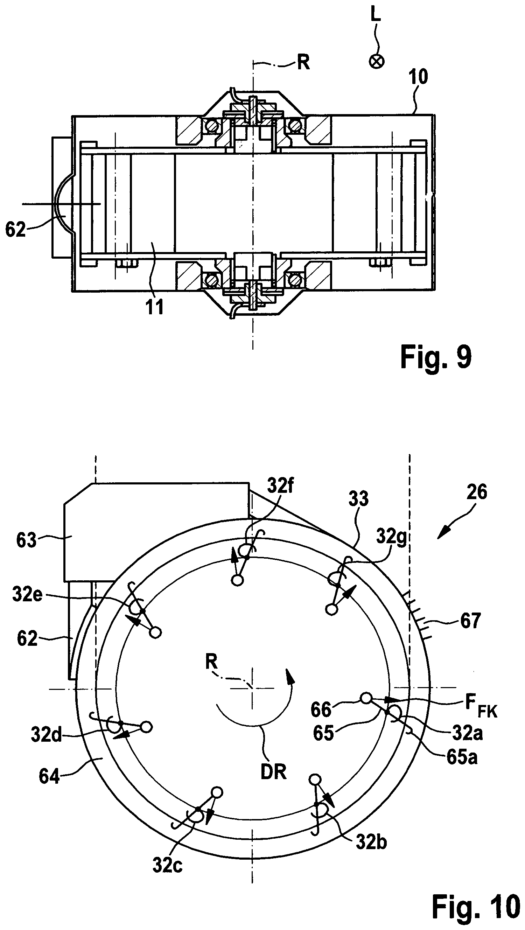

Fig. 9 zeigt eine Schnittansicht der Masseentkopplungsvorrichtung für ein Kraftfahrzeug gemäß einer dritten Ausführungsform der Erfindung.

In Fig. 9 ist eine Bremsanordnung zum Abbremsen des Masseaufnahmeelements 10 und des darin aufgenommenen Masseobjekts 11 vorgesehen. In einem Umfangsbereich des Masseaufnahmeelements 10 ist ein Saugkanal 62 angeordnet. Dieser wird mit Bezug auf Fig. 10 näher beschrieben.

Fig. 10 zeigt eine Längsschnittansicht der Masseentkopplungsvorrichtung für ein Kraftfahrzeug gemäß der dritten Ausführungsform der Erfindung;

Eine Bremsanordnung 26 zum Abbremsen des Masseaufnahmeelements 10 und des darin aufgenommenen Masseobjekts 11 weist ein pneumatisches Bremselement 27 und eine Mehrzahl von mechanischen Bremselementen 28a, 28b, 28c, 28d, 28e, 28f, 28g auf.

Das pneumatische Bremselement 27 ist dazu ausgebildet, durch Zuführung eines Luftstroms in einem zwischen einem äußeren Umfangsabschnitt 29 des Masseobjekts 11 und einem inneren Umfangsabschnitt 33 eines Gehäuses der Bremsanordnung 26 ausgebildeten Kanal 31 mit der Mehrzahl von mechanischen Bremselementen 28a, 28b, 28c, 28d, 28e, 28f, 28g derart zusammenwirken, dass die durch den Kanal 31 strömende Luft einen bei Auftreffen auf die Mehrzahl von flächig ausgebildeten mechanischen Bremselementen 28a, 28b, 28c, 28d, 28e, 28f, 28g einen Verzögerungsimpuls zum Abbremsen des Masseaufnahmeelements 10 und des darin aufgenommenen Masseobjekts 11 bewirkt.

Alternativ kann auch die Zuführung von Druckgas, insbesondere Druckluft, oder eines anderen geeigneten Gases, welches durch eine beispielsweise geringe Temperatur eine Kühlwirkung auf die Bremsanordnung 26 ausübt, vorgesehen werden.

Die Mehrzahl von mechanischen Bremselementen 28a, 28b, 28c, 28d, 28e, 28f, 28g sind jeweils mit einer Federkraft F_{FE} eines Federelements 32a, 32b, 32c, 32d, 32e, 32f, 32g beaufschlagt, welche bei Anliegen einer Federkraft F_{FE}, welche größer als eine durch die Rotation des Masseaufnahmeelements 10 und des darin aufgenommenen Masseobjekts 11 erzeugte Fliehkraft F_{FK} ist, ein mechanisches Abbremsen des Masseelements durch Reibungskontakte der Mehrzahl von mechanischen Bremselementen 28a, 28b, 28c, 28d, 28e, 28f, 28g mit einer inneren Umfangsfläche 33 des Gehäuses der Bremsanordnung 26 bewirkt.

Somit erfolgt ein kontrollierter Abbau der kinetischen Energie des rotierenden Masseaufnahmeelements und des darin aufgenommenen Masseobjekts durch kombiniertes pneumatisches und mechanisches Bremsen.

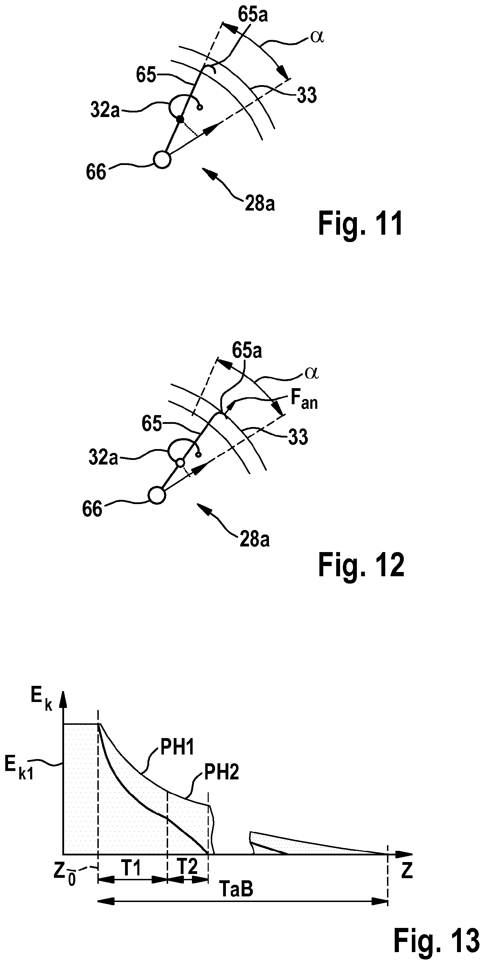

Fig. 11 zeigt eine schematische Darstellung einer Bremsanordnung zum Abbremsen des Masseaufnahmeelements und des darin aufgenommenen Masseobjekts gemäß der dritten Ausführungsform der Erfindung.

In Fig. 11 ist das Bremselement 65, beispielsweise des mechanischen Bremselements 28a, in einer Position gezeigt, in welcher ein Reibelement 65a des Bremselements 25 mit der inneren Umfangsfläche 33 des Gehäuses der Bremsanordnung 26 keinen Kontakt bildet.

Fig. 12 zeigt eine schematische Darstellung einer Bremsanordnung zum Abbremsen des Masseaufnahmeelements und des darin aufgenommenen Masseobjekts gemäß der dritten Ausführungsform der Erfindung.

In Fig. 12 bildet das Reibelement 65a des Bremselements 65 mit der inneren Umfangsfläche 33 des Gehäuses der Bremsanordnung 26 Reibungskontakt. Somit kommt es zu einem mechanischen Abbremsen des Masseobjekts 11 durch die Bremsanordnung 26. Aufgrunddessen, da die Federkraft der Spiralfeder 32a größer als die Fliehkraft F_{FK} der Rotation des Masseobjekts 11 ist, wird das Bremselement 65 in einem Winkel 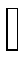 von einer ersten Position in eine zweite Position bewegt, in welcher das Bremselement 65 mit der inneren Umfangsfläche 33 des Gehäuses der Bremsanordnung 26 Reibungskontakt bildet, bis das Masseobjekt 11 durch die Reibung vollständig zum Stillstand kommt.

Fig. 13 zeigt ein zeitliches Ablaufdiagramm eines Abbaus einer kinetischen Energie einer Rotation des Masseaufnahmeelements und des darin aufgenommenen Masseobjekts gemäß der dritten Ausführungsform der Erfindung.

Im Bereich E_{K1} ist eine anfängliche kinetische Energie des Masseaufnahmeelements 10 und des darin aufgenommenen Masseobjekts 11 dargestellt. Zum Zeitpunkt Z₀ beginnt die Zeitperiode T1, in welcher, in der Phase PH1 eine Rotationsgeschwindigkeit des Masseaufnahmeelements und des darin aufgenommenen Masseobjekts durch pneumatisches Bremsen mittels des pneumatischen Bremselements durchgeführt wird. In der zweiten Periode T2, welche der Phase PH2 entspricht, ist die Fliehkraft, welche auf die mechanischen Bremselemente 28a bis 28g wirkt, geringer als die durch die Federelemente auf die Bremselemente wirkende Federkraft F_{FE}, sodass es zu einem mechanischen Bremsen mittels der mechanischen Bremselemente 28a bis 28g kommt. Eine Anpresskraft der mechanischen Bremselemente 28a bis 28g steigt mit steigender Reibkraft bzw. geringer werdender Fliehkraft bis das in Rotation versetzte Masseaufnahmeelement und das darin aufgenommene Masseobjekt vollständig angehalten sind. Das Bezugszeichen TaB bezeichnet eine gesamte zur Abbremsung des Masseobjekts 11 benötigte Zeitdauer.

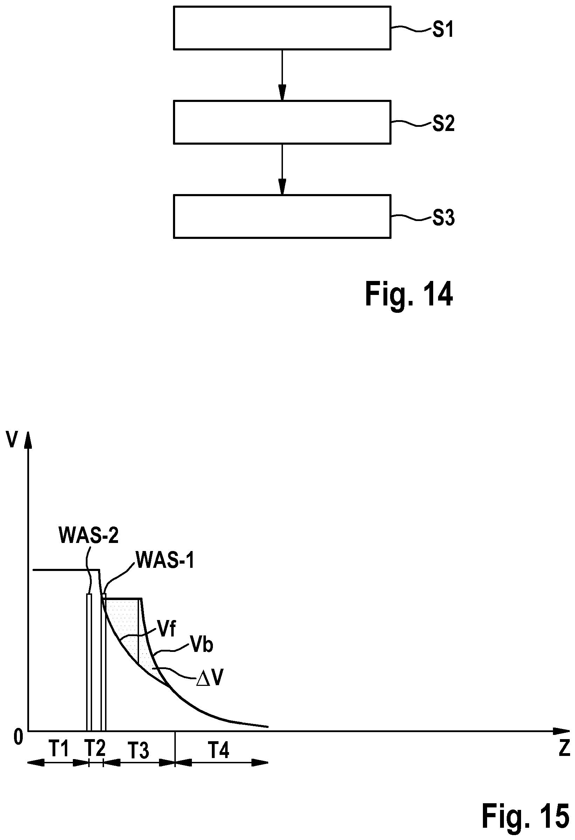

Fig. 14 zeigt ein Ablaufdiagramm des Verfahrens zur Masseentkopplung für ein Kraftfahrzeug gemäß der ersten Ausführungsform der Erfindung.

Das Verfahren zur Masseentkopplung für ein Kraftfahrzeug umfasst ein Entkoppeln S1 eines Masseaufnahmeelements 10 und eines darin aufgenommenen Masseobjekts 11, welche punktsymmetrisch aufgebaut und gegenüber einer Karosserie 12 des Kraftfahrzeugs gelagert sind, von der Karosserie 12 des Kraftfahrzeugs. Das Verfahren umfasst des Weiteren ein Übertragen S2 einer kinetischen Energie einer Bewegung des Masseaufnahmeelements 10 und des darin aufgenommenen Masseobjekts 11 entlang der Fahrzeuglängsachse, von einer ersten Position P1 in eine zweite Position P2 des Masseaufnahmeelements 10 und des darin aufgenommenen Masseobjekts 11 in einem vorgegebenen Zeitintervall auf die Karosserie 12 des Kraftfahrzeugs mittels ersten Energieaufnahmemitteln 15, wobei das Masseaufnahmeelement 10 und das darin aufgenommene Masseobjekt 11 entlang einer Fahrzeuglängsachse L mittels zumindest eines Führungsmittels beweglich gelagert werden. Das Verfahren umfasst überdies ein Umwandeln S3 der kinetischen Energie der Bewegung des Masseaufnahmeelements 10 und des darin aufgenommenen Masseobjekts 11 entlang der Fahrzeuglängsachse L zumindest teilweise in eine kinetische Energie einer Rotation des Masseobjekts mittels zweiten Energieaufnahmemitteln.

Fig. 15 zeigt ein zeitliches Ablaufdiagramm eines Geschwindigkeitsabbaus des Kraftfahrzeugs bei einem Fahrzeug-Crash mittels der Masseentkopplungsvorrichtung für ein Kraftfahrzeug gemäß der ersten bis dritten Ausführungsform der Erfindung.

In Fig. 15 ist eine Fahrzeuggeschwindigkeit in Funktion einer Zeitdauer dargestellt. Während der Zeitdauer T1 erfolgt eine Klemmenabschaltung durch Aktivierung der Wirbelstromaktoren 24a, 24b. Während der Zeitdauer T2 erfolgt die Umschaltung der Dämpfungsanordnung auf weich durch Aktivierung des Wirbelstromaktors 45. Des Weiteren wird der Sprengring 41 abgeschlossen. Während der Zeitdauer T3 erreicht das Masseobjekt wieder die gleiche lineare Geschwindigkeit als die Karosserie 12 des Kraftfahrzeugs. Während der Zeitdauer T4 wird das Fahrzeug bis zum Stillstand abgebremst. Das Bezugszeichen V_{F} bezeichnet die Fahrzeuggeschwindigkeit, das Bezugszeichen V_{B} bezeichnet die lineare Geschwindigkeit des Masseaufnahmeelements und des darin aufgenommenen Masseobjekts sowie das Bezugszeichen 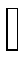 V bezeichnet eine Differenz der linearen Geschwindigkeiten zwischen dem Fahrzeug und dem Masseobjekt.

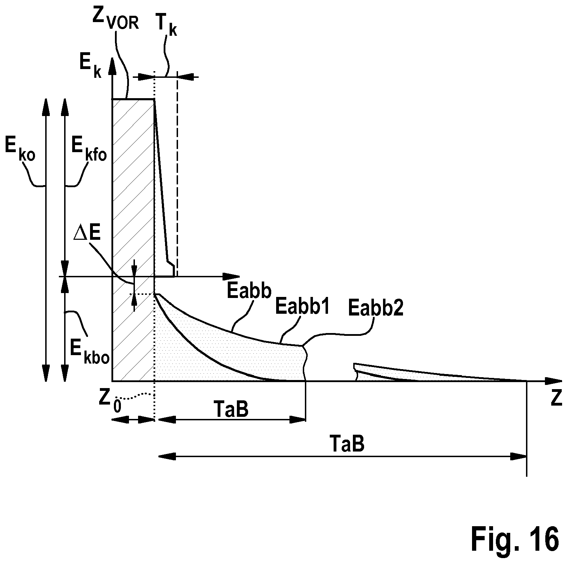

Fig. 16 zeigt ein zeitliches Ablaufdiagramm eines Energie-Abbaus bei einem Fahrzeug-Crash mittels der Masseentkopplungsvorrichtung für ein Kraftfahrzeug gemäß der ersten bis dritten Ausführungsform der Erfindung.

In Fig. 16 ist der Abbau der kinetischen Energie beim Fahrzeug-Crash vereinfacht dargestellt. Es ist eine Aufteilung der kinetischen Energien inklusive Zwischen-Speicherung durch die Rotation des Masseaufnahmeelements 10 und des darin aufgenommenen Masseobjekts 11.

Eine Rotationszeit des Masseaufnahmeelements 10 und des darin aufgenommenen Masseobjekts 11 kann je nach Art einer vorgesehenen Bremsvorrichtung und Option für die Nutzung der kinetischen Energie unterschiedlich lange dauern. Das Bezugszeichen Eₖₒ bezeichnet eine kinetische Energie des Fahrzeugs vor dem Crash. Die Bezugszeichen E_{Kfo}, E_{kbo} und 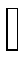 E bezeichnen jeweilige kinetische Energie-Anteile nach der Auslösung der Aktorik, Stößer usw. Das Bezugszeichen T_{K} bezeichnet eine Crash-Zeit für das Restfahrzeug bei stillstehender Karosserie.

Das Bezugszeichen T_{aB} bezeichnet eine Batterieauslaufzeit bis zum Stillstand des Masseobjekts bzw. der Batterie. Das Bezugszeichen Z₀ bezeichnet eine Crash-Beginnzeit. Das Bezugszeichen Eabb bezeichnet einen Energieabbau des Masseobjekts 11. Das Bezugszeichen Eabbl bezeichnet den unkontrollierten Abbau der kinetischen Energie des rotierenden Masseaufnahmeelements 10 und des darin aufgenommenen Masseobjekts 11 durch Luft- und/oder Lagerreibung. Das Bezugszeichen Eabb2 bezeichnet den kontrollierten Abbau der kinetischen Energie des Masseaufnahmeelements 10 und des darin aufgenommenen Masseobjekts 11 durch eine Kombination von pneumatischem und mechanischem Bremsen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann im Falle des Vorsehens der Bremsvorrichtung 26 ein Anschluss an einen evtl. vorhandenen Gasanschluss eines Kaltgasgenerators zur Bereitstellung einer relativ schnellen Abbremsung mit der Gegen-Gasströmung vorgesehen werden. Der Gasanschluss kann direkt in ein Kühlsystem des Kraftfahrzeugs integriert werden. Die Anströmung mit dem Gas erfolgt gegen die Rotationsrichtung des Masseobjekts. Alternativ kann ebenfalls eine Teilumwandlung der kinetischen Energie der Rotation des Masseobjekts direkt oder indirekt in ein akustisches Signal, beispielsweise mittels einer Sirene, welche dazu ausgebildet ist, ein Warnsignal betreffend den Unfall auszugeben, erfolgen. Die Tonerzeugung kann mit unterschiedlichen Methoden, beispielsweise mechanisch durch eine entsprechende Struktur an der Innenwand des Gehäuses pneumatisch oder mechanisch erfolgen.

## Patentansprüche

1. Masseentkopplungsvorrichtung für ein Kraftfahrzeug, mit:
einem Masseaufnahmeelement (10) und einem darin aufgenommenen Masseobjekt (11), wobei das Masseaufnahmeelement (10) und das Masseobjekt (11) punktsymmetrisch aufgebaut und gegenüber einer Karosserie (12) des Kraftfahrzeugs gelagert sind,
zumindest einem Führungsmittel (13), welches das Masseaufnahmeelement (10) und das darin aufgenommene Masseobjekt (11) entlang einer Fahrzeuglängsachse (L) beweglich lagert;
Entkopplungsmittel (14), welche dazu ausgebildet sind, das Masseaufnahmeelement (10) und das darin aufgenommene Masseobjekt (11) von der Karosserie (12) des Kraftfahrzeugs zu entkoppeln;
ersten Energieaufnahmemitteln (15), welche dazu ausgebildet sind, eine kinetische Energie einer Bewegung des Masseaufnahmeelements (10) und des darin aufgenommenen Masseobjekts (11) entlang der Fahrzeuglängsachse (L) von einer ersten Position (P1) in einer zweite Position (P2) in einem vorgegebenen Zeitintervall auf die Karosserie (12) des Kraftfahrzeugs zu übertragen; und
zweiten Energieaufnahmemitteln (16), welche dazu ausgebildet sind, die kinetische Energie der Bewegung des Masseaufnahmeelements (10) und des darin aufgenommenen Masseobjekts (11) entlang der Fahrzeuglängsachse (L) zumindest teilweise in eine kinetische Energie einer Rotation des Masseaufnahmeelements (10) und des darin aufgenommenen Masseobjekts (11) umzuwandeln.

2. Masseentkopplungsvorrichtung nach Anspruch 1, **dadurch gekennzeichnet, dass** die ersten Energieaufnahmemittel (15) zumindest eine Dämpfungsanordnung (17) aufweisen, welches dazu ausgebildet ist, die Bewegung des Masseaufnahmeelements (10) entlang der Fahrzeuglängsachse (L) zu dämpfen, wobei die zumindest eine Dämpfungsanordnung (17) einen ersten Wirbelstromaktor (45, 46) aufweist.

3. Masseentkopplungsvorrichtung nach Anspruch 1 oder 2, **dadurch gekennzeichnet, dass** das Masseobjekt (11) in einem Umfangsbereich einen Mitnehmer (18) aufweist, welcher derart ausgebildet ist, dass der Mitnehmer (18) bei einer Bewegung des Masseaufnahmeelements (10) und des darin aufgenommenen Masseobjekts (11) entlang der Fahrzeuglängsachse (L) mit den zweiten Energieaufnahmemitteln (16) derart zusammenwirkt, dass das Masseobjekt (11) durch die zweiten Energieaufnahmemittel (16) in Rotation versetzbar ist.

4. Masseentkopplungsvorrichtung nach Anspruch 3, **dadurch gekennzeichnet, dass** die zweiten Energieaufnahmemittel (16) einen mit einer Stoßstange (19) gelenkig verbundenen Stößer (20) aufweisen, welcher mit dem auf dem Masseaufnahmeelement (10) ausgebildeten Mitnehmer (18) derart zusammenwirkt, dass das Masseaufnahmeelement (10) bei einer Bewegung des Masseaufnahmeelements (10) und des darin aufgenommenen Masseobjekts (11) entlang der Fahrzeuglängsachse (L) durch den Stößer (20) in Rotation versetzbar ist, wobei die zweiten Energieaufnahmemittel (16) eine Rückholfeder (21) aufweisen, welche ein distales Ende des Stößers (20) mit der Stoßstange (19) verbindet, wobei der Mitnehmer (18) in der ersten Position (P1) des Masseaufnahmeelements (10) mit dem Stößer (20) im Eingriff ist, und wobei die zweiten Energieaufnahmemittel (16) dazu ausgebildet sind, den Stößer (20) nach in Rotation Versetzen des Masseaufnahmeelements (10) in einen in der Stoßstange (19) ausgebildeten Hohlraum (22) rückzuholen.

5. Masseentkopplungsvorrichtung nach einem der vorhergehenden Ansprüche, **dadurch gekennzeichnet, dass** die Entkopplungsmittel (14) zumindest eine Klemmeinrichtung (23) zum Koppeln und/oder Entkoppeln des Masseaufnahmeelements (10) von der Karosserie (12) des Kraftfahrzeugs und zumindest einen zweiten Wirbelstromaktor (24a, 24b) aufweisen, wobei der zumindest eine zweite Wirbelstromaktor (24a, 24b) dazu ausgebildet ist, die Klemmeinrichtung (23) zum Koppeln und/oder Entkoppeln des Masseaufnahmeelements (10) von der Karosserie (12) des Kraftfahrzeugs zu betätigen.

6. Masseentkopplungsvorrichtung nach Anspruch 5, **dadurch gekennzeichnet, dass** die Klemmeinrichtung (23) zum Koppeln und/oder Entkoppeln des Masseaufnahmeelements (10) von der Karosserie (12) des Kraftfahrzeugs in einer Rotationsachse (R) des Masseaufnahmeelements (10) und des darin aufgenommenen Masseobjekts (11) angeordnet ist.

7. Masseentkopplungsvorrichtung nach einem der vorhergehenden Ansprüche, **dadurch gekennzeichnet, dass** eine Entladung einer kinetischen Rotationsenergie des in Rotation versetzten Masseaufnahmeelements (10) und des darin aufgenommenen Masseobjekts (11) durch eine Luftreibung und/oder eine Lagerreibung zumindest eines Lagers (25a, 25b) des Masseaufnahmeelements (10) abbaubar ist.

8. Masseentkopplungsvorrichtung nach einem der vorhergehenden Ansprüche, **dadurch gekennzeichnet, dass** die Entladung einer kinetischen Rotationsenergie des in Rotation versetzten Masseaufnahmeelements (10) und des darin aufgenommenen Masseobjekts (11) durch eine Bremsanordnung (26) zum Abbremsen des Masseaufnahmeelements (10) und des darin aufgenommenen Masseobjekts (11) abbaubar ist.

9. Masseentkopplungsvorrichtung nach Anspruch 8, **dadurch gekennzeichnet, dass** die Bremsanordnung (26) zum Abbremsen des Masseaufnahmeelements (10) und des darin aufgenommenen Masseobjekts (11) ein pneumatisches Bremselement (27) und eine Mehrzahl von mechanischen Bremselementen (28a, 28b, 28c, 28d, 28e, 28f, 28g) aufweist, wobei das pneumatische Bremselement (27) dazu ausgebildet ist, durch Zuführung eines Luftstroms in einen zwischen einem äußeren Umfangsabschnitt (29) des Masseobjekts (11) und einem inneren Umfangsabschnitt (33) eines Gehäuses der Bremsanordnung (26) ausgebildeten Kanal (31) mit der Mehrzahl von mechanischen Bremselementen (28a, 28b, 28c, 28d, 28e, 28f, 28g) derart zusammenzuwirken, dass die durch den Kanal (31) strömende Luft einen bei Auftreffen auf die Mehrzahl von flächig ausgebildeten mechanischen Bremselementen (28a, 28b, 28c, 28d, 28e, 28f, 28g) einen Verzögerungsimpuls zum Abbremsen des Masseaufnahmeelements (10) und des darin aufgenommenen Masseobjekts (11) bewirkt, und wobei die Mehrzahl von mechanischen Bremselementen (28a, 28b, 28c, 28d, 28e, 28f, 28g) jeweils mit einer Federkraft (F_{FE}) eines Federelements (32a, 32b, 32c, 32d, 32e, 32f, 32g) beaufschlagt sind, welche bei Anliegen einer Federkraft (F_{FE}), welche größer als eine durch die Rotation des Masseaufnahmeelements (10) und des darin aufgenommenen Masseobjekts (11) erzeugte Fliehkraft (F_{FK}) ist, ein mechanisches Abbremsen des Masselements durch Reibungskontakt der Mehrzahl von mechanischen Bremselementen (28a, 28b, 28c, 28d, 28e, 28f, 28g) mit einer inneren Umfangsfläche (33) des Gehäuses der Bremsanordnung (26) bewirkt.

10. Verfahren zur Masseentkopplung für ein Kraftfahrzeug, mit den Schritten:
Entkoppeln (S1) eines Masseaufnahmeelements (10) und eines darin aufgenommenen Masseobjekts (11), welche punktsymmetrisch aufgebaut und gegenüber einer Karosserie (12) des Kraftfahrzeugs gelagert sind, von der Karosserie (12) des Kraftfahrzeugs;
Übertragen (S2) einer kinetischen Energie einer Bewegung des Masseaufnahmeelements (10) und des darin aufgenommenen Masseobjekts (11) entlang der Fahrzeuglängsachse, von einer ersten Position (P1) in einer zweite Position (P2) des Masseaufnahmeelements (10) und des darin aufgenommenen Masseobjekts (11) in einem vorgegebenen Zeitintervall auf die Karosserie (12) des Kraftfahrzeugs mittels ersten Energieaufnahmemitteln (15), wobei das Masseaufnahmeelement (10) und das darin aufgenommene Masseobjekt (11) entlang einer Fahrzeuglängsachse (L) mittels zumindest einem Führungsmittel (13) beweglich gelagert werden; und
Umwandeln (S3) der kinetischen Energie der Bewegung des Masseaufnahmeelements (10) und des darin aufgenommenen Masseobjekts (11) entlang der Fahrzeuglängsachse (L) zumindest teilweise in eine kinetische Energie einer Rotation des Masseaufnahmeelements (10) und des darin aufgenommenen Masseobjekts (11) mittels zweiten Energieaufnahmemitteln (16).

## Claims

1. Massdecoupling device for a motor vehicle, having:
a mass-receiving element (10) and a mass object (11) accommodated therein, wherein the mass-receiving element (10) and the mass object (11) are formed point-symmetrically and mounted with respect to a body (12) of the motor vehicle,
at least one guide means (13) which mounts the mass-receiving element (10) and the mass object (11) accommodated therein such that they can move along a vehicle longitudinal axis (L);
decoupling means (14) which are designed to decouple the mass-receiving element (10) and the mass object (11) accommodated therein from the body (12) of the motor vehicle;
first energy-absorbing means (15) which are designed to transmit kinetic energy of a movement of the mass-receiving element (10) and the mass object (11) accommodated therein along the vehicle longitudinal axis (L) from a first position (P1) to a second position (P2) in a predetermined time interval to the body (12) of the motor vehicle; and
second energy-absorbing means (16) which are designed to convert the kinetic energy of the movement of the mass-receiving element (10) and the mass object (11) accommodated therein along the vehicle longitudinal axis (L) at least partially into kinetic energy of a rotation of the mass-receiving element (10) and of the mass object (11) accommodated therein.

2. Mass decoupling device according to Claim 1, **characterized in that** the first energy-absorbing means (15) have at least one damping arrangement (17), which is designed to damp the movement of the mass-receiving element (10) along the vehicle longitudinal axis (L), wherein the at least one damping arrangement (17) has a first eddy current actuator (45, 46).

3. Mass decoupling device according to Claim 1 or 2, **characterized in that** the mass object (11) has a driver (18) in a circumferential region, which is formed in such a way that, during a movement of the mass-receiving element (10) and the mass object (11) accommodated therein along the vehicle longitudinal axis (L), the driver (18) interacts with the second energy-absorbing means (16) in such a way that the mass object (11) can be set in rotation by the second energy-absorbing means (16) .

4. Mass decoupling device according to Claim 3, **characterized in that** the second energy-absorbing means (16) have a push-rod (20) connected in an articulated manner to a bumper (19), which interacts with the driver (18) formed on the mass-receiving element (10) in such a way that, during a movement of the mass-receiving element (10) and the mass object (11) accommodated therein along the vehicle longitudinal axis (L), the mass-receiving element (10) can be set in rotation by the push-rod (20), wherein the second energy-absorbing means (16) have a return spring (21), which connects a distal end of the push-rod (20) to the bumper (19), wherein the driver (18) engages with the push-rod (20) in the first position (P1) of the mass-receiving element (10), and wherein the second energy-absorbing means (16) are designed to return the push-rod (20) into a hollow space (22) formed in the bumper (19) after the mass-receiving element (10) has been set in rotation.

5. Mass decoupling device according to one of the preceding claims, **characterized in that** the decoupling means (14) have at least one clamping device (23) for coupling and/or decoupling the mass-receiving element (10) to and/or from the body (12) of the motor vehicle and at least one second eddy current actuator (24a, 24b), wherein the at least one second eddy current actuator (24a, 24b) is designed to actuate the clamping device (23) for coupling and/or decoupling the mass-receiving element (10) to and/or from the body (12) of the motor vehicle.

6. Mass decoupling device according to Claim 5, **characterized in that** the clamping device (23) for coupling and/or decoupling the mass-receiving element (10) to and/or from the body (12) of the motor vehicle is arranged in an axis of rotation (R) of the mass-receiving element (10) and the mass object (11) accommodated therein.

7. Mass decoupling device according to one of the preceding claims, **characterized in that** discharge of kinetic rotational energy of the mass-receiving element (10) set in rotation and the mass object (11) accommodated therein can be dissipated by air friction and/or bearing friction of at least one bearing (25a, 25b) of the mass-receiving element (10) .

8. Mass decoupling device according to one of the preceding claims, **characterized in that** the discharge of kinetic rotational energy of the mass-receiving element (10) set in rotation and the mass object (11) accommodated therein can be dissipated by a brake assembly (26) for braking the mass-receiving element (10) and the mass object (11) accommodated therein.

9. Mass decoupling device according to Claim 8, **characterized in that** the brake assembly (26) for braking the mass-receiving element (10) and the mass object (11) accommodated therein has a pneumatic brake element (27) and a plurality of mechanical brake elements (28a, 28b, 28c, 28d, 28e, 28f, 28g), wherein the pneumatic brake element (27) is designed to interact with the plurality of mechanical brake elements (28a, 28b, 28c, 28d, 28e, 28f, 28g), by feeding an air stream into a channel (31) formed between an outer circumferential section (29) of the mass object (11) and an inner circumferential section (33) of a housing of the brake assembly (26), in such a way that the air flowing through the channel (31), when it impinges on the plurality of flat mechanical brake elements (28a, 28b, 28c, 28d, 28e, 28f, 28g), effects a retardation impulse for braking the mass-receiving element (10) and the mass object (11) accommodated therein, and wherein the plurality of mechanical brake elements (28a, 28b, 28c, 28d, 28e, 28f, 28g) are each loaded with a spring force (F_{FE}) of a spring element (32a, 32b, 32c, 32d, 32e, 32f, 32g) which, when a spring force (F_{FE}) that is greater than a centrifugal force (F_{FK}) generated by the rotation of the mass-receiving element (10) and the mass object (11) accommodated therein is applied, mechanical braking of the mass element is effected by frictional contact with the plurality of mechanical brake elements (28a, 28b, 28c, 28d, 28e, 28f, 28g) with an inner circumferential surface (33) of the housing of the brake assembly (26) .

10. Method for mass decoupling for a motor vehicle, comprising the steps:
decoupling (S1) a mass-receiving element (10) and a mass object (11) accommodated therein, which are formed point-symmetrically and mounted with respect to a body (12) of the motor vehicle, from the body (12) of the motor vehicle;
transmitting (S2) kinetic energy of a movement of the mass-receiving element (10) and the mass object (11) accommodated therein along the vehicle longitudinal axis from a first position (P1) to a second position (P2) of the mass-receiving element (10) and the mass object (11) accommodated therein in a predefined time interval to the body (12) of the motor vehicle by means of first energy-absorbing means (15), wherein the mass-receiving element (10) and the mass object (11) accommodated therein are mounted by means of at least one guide means (13) such that they can move along a vehicle longitudinal axis (L); and
converting (S3) the kinetic energy of the movement of the mass-receiving element (10) and the mass object (11) accommodated therein along the vehicle longitudinal axis (L) at least partly into kinetic energy of a rotation of the mass-receiving element (10) and the mass object (11) accommodated therein by means of second energy-absorbing means (16).

## Revendications

1. Dispositif de découplage de masse pour un véhicule automobile, comprenant :
un élément de réception de masse (10) et un objet masse (11) reçu dans celui-ci, dans lequel l'élément de réception de masse (10) et l'élément objet (11) sont conçus de manière à présenter une symétrie ponctuelle et sont supportés par rapport à une carrosserie (12) du véhicule automobile,
au moins un moyen de guidage (13), lequel supporte de manière mobile l'élément de réception de masse (10) et l'objet masse (11) reçu dans celui-ci le long d'un axe longitudinal du véhicule (L) ;
des moyens de découplage (14), lesquels sont conçus pour découpler l'élément de réception de masse (10) et l'objet masse (11) reçu dans celui-ci de la carrosserie (12) du véhicule automobile ;
des premiers moyens d'absorption d'énergie (15), lesquels sont conçus pour transmettre à la carrosserie (12) du véhicule automobile une énergie cinétique d'un mouvement de l'élément de réception de masse (10) et de l'objet masse (11) reçu dans celui-ci le long de l'axe longitudinal du véhicule (L) d'une première position (P1) à une deuxième position (P2) dans un intervalle de temps prédéfini ; et
des deuxièmes moyens d'absorption d'énergie (16), lesquels sont conçus pour convertir l'énergie cinétique du mouvement de l'élément de réception de masse (10) et de l'objet masse (11) reçu dans celui-ci le long de l'axe longitudinal du véhicule (L) au moins partiellement en une énergie cinétique d'une rotation de l'élément de réception de masse (10) et de l'objet masse (11) reçu dans celui-ci.

2. Dispositif de découplage de masse selon la revendication 1, **caractérisé en ce que** les premiers moyens d'absorption d'énergie (15) comprennent au moins un ensemble d'amortissement (17), lequel est conçu pour amortir le mouvement de l'élément de réception de masse (10) le long de l'axe longitudinal du véhicule (L), ledit au moins un ensemble d'amortissement (17) comprenant un premier actionneur à courants de Foucault (45, 46).

3. Dispositif de découplage de masse selon la revendication 1 ou 2, **caractérisé en ce que** l'objet masse (11) comprend, dans une région périphérique, un élément d'entraînement (18), lequel est conçu de telle sorte que, lors d'un mouvement de l'élément de réception de masse (10) et de l'objet masse (11) reçu dans celui-ci le long de l'axe longitudinal du véhicule (L), l'élément d'entraînement (18) coopère avec les deuxièmes moyens d'absorption d'énergie (16) de telle sorte que l'objet masse (11) puisse être mis en rotation par les deuxièmes moyens d'absorption d'énergie (16).

4. Dispositif de découplage de masse selon la revendication 3, **caractérisé en ce que** les deuxièmes moyens d'absorption d'énergie (16) comprennent un élément d'impact (20) relié de manière articulée à un pare-chocs (19), lequel élément d'impact coopère avec l'élément d'entraînement (18) formé sur l'élément de réception de masse (10) de telle sorte que l'élément de réception de masse (10) puisse être mis en rotation par l'élément d'impact (20) lors d'un mouvement de l'élément de réception de masse (10) et de l'objet masse (11) reçu dans celui-ci le long de l'axe longitudinal du véhicule (L), les deuxièmes moyens d'absorption d'énergie (16) comprenant un ressort de rappel (21), lequel relie une extrémité distale de l'élément d'impact (20) au pare-chocs (19), l'élément d'entraînement (18) étant en prise avec l'élément d'impact (20) dans la première position (P1) de l'élément de réception de masse (10), et les deuxièmes moyens d'absorption d'énergie (16) étant conçus pour ramener l'élément d'impact (20) dans une cavité (22) formée dans le pare-chocs (19) après la mise en rotation de l'élément de réception de masse (10).

5. Dispositif de découplage de masse selon l'une quelconque des revendications précédentes, **caractérisé en ce que** les moyens de découplage (14) comprennent au moins un dispositif de serrage (23) pour le couplage et/ou le découplage de l'élément de réception de masse (10) à/de la carrosserie (12) du véhicule automobile et au moins un deuxième actionneur à courants de Foucault (24a, 24b), ledit au moins un deuxième actionneur à courants de Foucault (24a, 24b) étant conçu pour actionner le dispositif de serrage (23) pour le couplage et/ou le découplage de l'élément de réception de masse (10) à/de la carrosserie (12) du véhicule automobile.

6. Dispositif de découplage de masse selon la revendication 5, **caractérisé en ce que** le dispositif de serrage (23) pour le couplage et/ou le découplage de l'élément de réception de masse (10) à/de la carrosserie (12) du véhicule automobile est disposé dans un axe de rotation (R) de l'élément de réception de masse (10) et de l'objet masse (11) reçu dans celui-ci.

7. Dispositif de découplage de masse selon l'une quelconque des revendications précédentes, **caractérisé en ce qu'**une décharge d'une énergie rotationnelle cinétique de l'élément de réception de masse (10) mis en rotation et de l'objet masse (11) reçu dans celui-ci peut être réduite par un frottement de l'air et/ou un frottement d'au moins un palier (25a, 25b) de l'élément de réception de masse (10).

8. Dispositif de découplage de masse selon l'une quelconque des revendications précédentes, **caractérisé en ce que** la décharge d'une énergie rotationnelle cinétique de l'élément de réception de masse (10) mis en rotation et de l'objet masse (11) reçu dans celui-ci peut être réduite au moyen d'un ensemble de freinage (26) servant à freiner l'élément de réception de masse (10) et l'objet masse (11) reçu dans celui-ci.

9. Dispositif de découplage de masse selon la revendication 8, **caractérisé en ce que** l'ensemble de freinage (26) servant à freiner l'élément de réception de masse (10) et l'objet masse (11) reçu dans celui-ci comprend un élément de freinage pneumatique (27) et une pluralité d'éléments de freinage mécaniques (28a, 28b, 28c, 28d, 28e, 28f, 28g), l'élément de freinage pneumatique (27) étant conçu pour coopérer avec la pluralité d'éléments de freinage mécaniques (28a, 28b, 28c, 28d, 28e, 28f, 28g) par introduction d'un flux d'air dans un canal (31) formé entre une partie périphérique extérieure (29) de l'objet masse (11) et une partie périphérique intérieure (33) d'un boîtier de l'ensemble de freinage (26), de telle sorte que l'air s'écoulant à travers le canal (31) produise, lorsqu'il heurte la pluralité d'éléments de freinage mécaniques (28a, 28b, 28c, 28d, 28e, 28f, 28g) plans, une impulsion de décélération servant à freiner l'élément de réception de masse (10) et l'objet masse (11) reçu dans celui-ci, et la pluralité d'éléments de freinage mécaniques (28a, 28b, 28c, 28d, 28e, 28f, 28g) étant soumis respectivement à une force élastique (F_{FE}) d'un élément ressort (32a, 32b, 32c, 32d, 32e, 32f, 32g), laquelle force élastique produit, lors de l'application d'une force élastique (F_{FE}) qui est supérieure à une force centrifuge (F_{FK}) produite par la rotation de l'élément de réception de masse (10) et de l'objet masse (11) reçu dans celui-ci, un freinage mécanique de l'élément masse par contact de frottement de la pluralité d'éléments de freinage mécaniques (28a, 28b, 28c, 28d, 28e, 28f, 28g) avec une surface périphérique intérieure (33) du boîtier de l'ensemble de freinage (26).

10. Procédé de découplage de masse pour un véhicule automobile, le procédé comprenant les étapes consistant à :
découpler (S1) un élément de réception de masse (10) et un objet masse (11) reçu dans celui-ci, lesquels sont conçus de manière à présenter une symétrie ponctuelle et sont supportés par rapport à une carrosserie (12) du véhicule automobile, de la carrosserie (12) du véhicule automobile ;
transmettre (S2) à la carrosserie (12) du véhicule automobile une énergie cinétique d'un mouvement de l'élément de réception de masse (10) et de l'objet masse (11) reçu dans celui-ci le long de l'axe longitudinal du véhicule d'une première position (P1) à une deuxième position (P2) de l'élément de réception de masse (10) et de l'objet masse (11) reçu dans celui-ci dans un intervalle de temps prédéfini au moyen de premiers moyens d'absorption d'énergie (15), l'élément de réception de masse (10) et l'objet masse (11) reçu dans celui-ci étant supportés de manière mobile le long d'un axe longitudinal du véhicule (L) au moyen d'au moins un moyen de guidage (13) ; et
convertir (S3) l'énergie cinétique du mouvement de l'élément de réception de masse (10) et de l'objet masse (11) reçu dans celui-ci le long de l'axe longitudinal du véhicule (L) au moins partiellement en une énergie cinétique d'une rotation de l'élément de réception de masse (10) et de l'objet masse (11) reçu dans celui-ci au moyen de deuxièmes moyens d'absorption d'énergie (16).
